# EUROPÄISCHE PATENTSCHRIFT

(11) **EP 2 976 383 B1**
(45) Veröffentlichungstag und Bekanntmachung des Hinweises auf die Patenterteilung: **04.07.2018**
(21) Anmeldenummer: 13716736.7
(22) Anmeldetag: 18.03.2013
(51) Int. Cl.: B60L 5/20, C09J 5/06, C09J 9/02

(54) **VERFAHREN ZUR HERSTELLUNG EINES GEKLEBTEN SCHLEIFBÜGELS FÜR STROMABNEHMER**
PROCESS FOR PRODUCING A GLUED MOUNTING OF A SLIDING BRUSH FOR A CURRENT COLLECTOR
PROCÉDÉ DE FABRICATION D'UNE MONTURE COLLÉE DE BALAI FROTTEUR POUR PRISE DE COURANT

(43) Veröffentlichungstag der Anmeldung: 27.01.2016
(73) Patentinhaber: PanTrac GmbH, 10367 Berlin (DE)
(72) Erfinder: KINAST, Bernd, 13127 Berlin (DE); SCHULZ, Andreas, 12623 Berlin (DE)
(74) Vertreter: Gulde & Partner
(86) Internationale Anmeldenummer: PCT/EP2013/055526
(87) Internationale Veröffentlichungsnummer: WO 2014/146674

(56) Entgegenhaltungen:
- EP-A2- 0 313 880
- US-A1- 2006 060 296

## Beschreibung

Die Erfindung betrifft ein Verfahren zur Herstellung einer Verbindung zwischen einer Kohlenstoffleiste und einer metallischen Fassung eines Schleifbügels für Stromabnehmer mittels eines Klebstoffs.

### Technologischer Hintergrund und Stand der Technik

Zur Übertragung elektrischer Ströme zwischen gegeneinander bewegten elektrischen Leitern bestimmte Schleifbügel weisen im Allgemeinen eine Kohlenstoffleiste und eine metallische Fassung auf. Zweck von Fassung und Träger ist vor allem die Versteifung der Kohlenstoffleisten, deren Festigkeit ansonsten den mechanischen Belastungen im Betrieb nicht standhalten könnte. Die Kohlenstoffleisten sind häufig in die Fassung geklemmt oder durch Nieten oder Schrauben mit der Fassung verbunden. Da die bekannten mechanischen Verbindungen wegen ihrer Kerbwirkung die Dauerfestigkeit der Kohlenstoffleisten beeinträchtigen, verwendet man alternativ Löt- und Klebverbindungen zur Befestigung der Kohlenstoffleisten auf der Fassung. Beispielsweise wird die Kohlenstoffleiste auf eine Fassung in Form eines Blechträgers mit Hilfe einer Kunstharzschicht geklebt. Das Kunstharz wird auf die Unterseite der Leiste, die zuvor zur Verbesserung der Stromverteilung mit einer Kupferschicht versehen ist, und die Blechfassung aufgetragen, die Teile werden zusammengefügt und die Kunstharzschichten gehärtet. Der elektrische Widerstand der verbindenden Klebstoffschicht kann durch Metallpulver (DE 26 54 264 A1) verkleinert werden, die in der Klebstoffschicht eingebettet sind. Eine weitere Verbesserung der Betriebseigenschaften geklebter Schleifbügel kann erreicht werden, wenn die zu verklebenden Flächen von Kohlenstoffleiste und Fassung aufgeraut, mit einer verdünnten Klebstofflösung beschichtet werden, auf wenigstens einer Klebstoffschicht elektrisch leitende Partikel aufgetragen, die Flächen zusammengepresst und die Klebstoffschichten gehärtet werden (EP 0 313 880 B1).

Es besteht jedoch weiterhin anhaltender Bedarf, die Langzeitstabilität des Schleifbügels und Prozesssicherheit seiner Fertigung zu verbessern.

### Zusammenfassung der Erfindung

Mit Hilfe des erfindungsgemäßen Verfahrens zur Herstellung einer Verbindung zwischen einer Kohlenstoffleiste und einer metallischen Fassung eines Schleifbügels für Stromabnehmer mittels eines Klebstoffs, der elektrisch leitende Partikel enthält, lassen sich ein oder mehrere Limitierungen des Standes der Technik beheben oder zumindest mindern. Das Verfahren zeichnet sich dadurch aus, dass der Klebstoff 40 - 50 Gewichtsteile einer ersten Klebstoffkomponente auf Basis eines Phenolharzes, 5 - 20 Gewichtsteile einer zweiten Klebstoffkomponente auf Basis eines Epoxidharzes, und 40 - 50 Gewichtsteile leitfähiger Partikel, vorzugsweise aus Kupfer, enthält.

Der Erfindung liegt die Erkenntnis zugrunde, dass die Verwendung eines Klebstoffes aus einem Gemisch eines Phenolharzes und eines Epoxidharzes eine Fertigung der Schleifbügel mit besonders hoher Prozesssicherheit ermöglicht und zudem die mechanischen Eigenschaften des Schleifbügels, beispielsweise seine Langzeitlauffähigkeit, verbessert. Insbesondere können erhöhte Spannungsspitzen an den Seiten der geklebten Kohlenstoffleiste kompensiert werden, denn das elastische Verhalten des erfindungsgemäß eingesetzten Klebstoffs ist deutlich verbessert. Auch die Dauertemperaturbeständigkeit bei Temperaturen von 190 °C, sowie Temperaturbeständigkeit bei Temperaturen von über 250 °C ist verbessert (Kontrollmerkmal Scherfestigkeit).

Die erste Klebstoffkomponente ist demnach ein Phenolharz. Phenolharze lassen sich durch Polykondensation von Phenolen mit Aldehyden synthetisieren und bilden in der Regel duroplastische Kunststoffe (Phenoplaste). Die erste Klebstoffkomponente kann weitere Additive zur Stabilisierung oder Einstellung der Klebstoffeigenschaften enthalten.

Die zweite Klebstoffkomponente ist ein Epoxidharz, also eine Polyether mit in der Regel zwei endständigen Epoxidgruppen. Das Epoxidharz wird mit einem Härtungsmittel zum makromolekularen Kunststoff umgesetzt. Epoxidharze werden beispielsweise durch Umsetzung von Epichlorhydin mit Polyolen oder Dicarbonsäuren gewonnen. Auch die erfindungsgemäß eingesetzten Epoxidharze können Additive enthalten.

Schließlich enthält der Kunststoff die genannten Anteile leitfähiger Partikel, zumeist in Form eines zugesetzten Metallpulvers. Die Partikel bestehen beispielsweise aus Kupfer, Eisen und Aluminium oder liegen als versilberte Kupferpartikel vor. Der Klebstoff wird in der Regel frisch aus den genannten Komponenten hergestellt, aufgetragen und ausgehärt.

Gemäß einer bevorzugten Ausgestaltung des Verfahrens enthält das Epoxidharz ein Gemisch aus mindestens 2 Komponenten ausgewählt aus der Gruppe umfassend Bisphenol-A-Epoxidharz, Bisphenol-F-Epoxidharz und Novolak-Epoxidharz. Besonders bevorzugt sind alle drei genannten Komponenten Bestandteil des Epoxidharzes. Insbesondere enthält das Epoxidharz 30 - 60 Gewichtsteile Bisphenol-A-Epoxidharz, 10 - 40 Gewichtsteile Bisphenol-F-Epoxidharz und 5 - 30 Gewichtsteile Novolak-Epoxidharz. Besonders bevorzugt enthält das Epoxidharz 40 - 50 Gewichtsteile Bisphenol-A-Epoxidharz, 15 - 30 Gewichtsteile Bisphenol-F-Epoxidharz und 10 - 20 Gewichtsteile Novolak-Epoxidharz. Die Verwendung eines Gemisches aus den genannten Epoxidharzen liefert besonders dauertemperaturbeständige und den hohen mechanischen Belastungen standhaltende geklebte Schleifbügel.

Der Klebstoff kann ferner 3 - 10 Gewichtsteile Additive enthalten. Insbesondere kann Fe₃O₄ zugesetzt werden, um die Lagerstabilität des Klebstoffs zu verbessern, insbesondere wenn der Klebstoff bereits einen Beschleuniger zur Härtung bei Raumtemperatur als weiteres Additiv enthält. Weitere bekannte Zusätze sind beispielsweise SiO₂. Gegebenenfalls kann der Klebstoff vor seiner bestimmungsgemäßen Verwendung noch durch Zusatz eines Lösungsmittels oder auch Reaktiwerdünners auf eine verarbeitungsfreundliche Viskosität eingestellt werden.

Vorzugsweise wird der Klebstoff unter Druck von 30 - 40 N/cm² und/oder bei einer Temperatur im Bereich von 80 bis 200 °C, insbesondere 100 bis 130 °C, ausgehärtet. Unter den genannten Bedingungen lassen sich geklebte Schleifbügel mit besonders hoher Qualität herstellen.

### Detaillierte Beschreibung der Erfindung

Die Herstellung des Klebstoffs wird anhand eines Ausführungsbeispiels näher erläutert.

Zunächst wird eine erste Klebstoffkomponente in einem Mischbehälter verarbeitet. Hierzu werden 47 Gewichtsteile eines Phenolharzes, 1 Gewichtsteil Graphitpulver, 2 Gewichtsteile SiO₂-Partikel und 50 Gewichtsteile Kupferpulver vermengt.

85 Gewichtsteile dieses ersten Gemisches werden dann mit 15 Gewichtsteilen eines zweiten Gemisches aus einem Bisphenol-A-Epoxidharz (niedermolekular, 45 Gewichtsteile am zweiten Gemisch) Bisphenol-F-Epoxidharz (niedermolekular, 22 Gewichtsteile am zweiten Gemisch) und Novolak-modifiziertes Epoxidharz (19 Gewichtsteile am zweiten Gemisch) versetzt.

Die Klebefläche der Aluminiumfassung wird mit dem Klebstoff mittels eines Spachtels beaufschlagt. Die Breite des Klebstoffauftrags liegt in der Regel knapp unterhalb der Leistenbreite und es werden Klebstoffmengen im Bereich von 0,1 bis 0,2 g/cm² aufgetragen. Kohlenstoffleiste und Aluminiumfassung werden zusammengefügt und in einer Klebepresse unter Druck von 30 bis 40 N/cm² für ca. elf Stunden zwischen 100 bis 130°C ausgehärtet.

## Patentansprüche

1. Verfahren zur Herstellung einer Verbindung zwischen einer Kohlenstoffleiste und einer metallischen Fassung eines Schleifbügels für Stromabnehmer mittels eines Klebstoffs, der elektrisch leitende Partikel enthält, **dadurch gekennzeichnet, dass** der Klebstoff
40 - 50 Gewichtsteile einer ersten Klebstoffkomponente auf Basis eines Phenolharzes,
5 - 20 Gewichtsteile einer zweiten Klebstoffkomponente auf Basis eines Epoxidharzes, und
40 - 50 Gewichtsteile leitfähiger Partikel
enthält.

2. Verfahren nach Anspruch 1, bei dem das Epoxidharz ein Gemisch aus mindestens 2 Komponenten ausgewählt aus der Gruppe umfassend Bisphenol-A-Epoxidharz, Bisphenol-F-Epoxidharz und Novolak-Epoxidharz enthält.

3. Verfahren nach Anspruch 2, bei dem das Epoxidharz Bisphenol-A-Epoxidharz, Bisphenol-F-Epoxidharz und Novolak-Epoxidharz enthält.

4. Verfahren nach Anspruch 3, bei dem das Epoxidharz
30 - 60 Gewichtsteile Bisphenol-A-Epoxidharz,
10 - 40 Gewichtsteile Bisphenol-F-Epoxidharz und
5 - 30 Gewichtsteile Novolak-Epoxidharz
enthält.

5. Verfahren nach Anspruch 4, bei dem das Epoxidharz
40 - 50 Gewichtsteile Bisphenol-A-Epoxidharz,
15 - 30 Gewichtsteile Bisphenol-F-Epoxidharz und
10 - 20 Gewichtsteile Novotak-Epoxidharz
enthält.

6. Verfahren nach einem der vorhergehenden Ansprüche, bei dem die leitfähigen Partikel aus Kupfer bestehen.

7. Verfahren nach einem der vorhergehenden Ansprüche, bei dem als Additiv Fe₃O₄ zugesetzt wird.

8. Verfahren nach einem der vorhergehenden Ansprüche, bei dem der Klebstoff 3 - 10 Gewichtsteile Additive enthält.

9. Verfahren nach einem der vorhergehenden Ansprüche, bei dem der Klebstoff unter Druck von 30 - 40 N/cm² ausgehärtet wird.

10. Verfahren nach einem der vorhergehenden Ansprüche, bei dem der Klebstoff bei einer Temperatur im Bereich von 80 - 200°C, insbesondere 100 - 130 °C ausgehärtet wird.

## Claims

1. Process for producing a connection between a carbon strip and a metal mounting of a sliding brush for current collectors by means of an adhesive containing electrically conductive particles, **characterized in that** the adhesive contains
40-50 parts by weight of a first adhesive component based on a phenolic resin,
5-20 parts by weight of a second adhesive component based on an epoxy resin, and
40-50 parts by weight of conductive particles.

2. Process according to claim 1, wherein the epoxy resin contains a mixture of at least 2 components selected from the group comprising bisphenol A epoxy resin, bisphenol F epoxy resin, and novolac epoxy resin.

3. Process according to claim 2, wherein the epoxy resin contains bisphenol A epoxy resin, bisphenol F epoxy resin, and novolac epoxy resin.

4. Process according to claim 3, wherein the epoxy resin contains
30-60 parts by weight of bisphenol A epoxy resin,
10-40 parts by weight of bisphenol F epoxy resin, and
5-30 parts by weight of novolac epoxy resin.

5. Process according to claim 4, wherein the epoxy resin contains
40-50 parts by weight of bisphenol A epoxy resin,
15-30 parts by weight of bisphenol F epoxy resin, and
10-20 parts by weight of novolac epoxy resin.

6. Process according to any of the preceding claims, wherein the conductive particles are made of copper.

7. Process according to any of the preceding claims, wherein Fe₃O₄ is added as an additive.

8. Process according to any of the preceding claims, wherein the adhesive contains 3-10 parts by weight of additives.

9. Process according to any of the preceding claims, wherein the adhesive is cured at a pressure of 30-40 N/cm².

10. Process according to any of the preceding claims, wherein the adhesive is cured at a temperature in the range of 80-200°C, particularly 100-130°C.

## Revendications

1. Procédé d'établissement d'une liaison entre une barre de carbone et une monture métallique d'un balai frotteur pour des prises de courant au moyen d'un adhésif contenant des particules électriquement conductrices, **caractérisé en ce que** l'adhésif contient
40-50 parties en poids d'un premier composant adhésif à base d'une résine phénolique,
5-20 parties en poids d'un second composant adhésif à base d'une résine époxy, et
40-50 parties en poids de particules conductrices.

2. Procédé selon la revendication 1, dans lequel la résine époxy contient un mélange d'au moins 2 composants sélectionnés dans le groupe comprenant de la résine époxy bisphénol A, de la résine époxy bisphénol F, et de la résine novolaque époxy.

3. Procédé selon la revendication 2, dans lequel la résine époxy contient de la résine époxy bisphénol A, de la résine époxy bisphénol F, et de la résine novolaque époxy.

4. Procédé selon la revendication 3, dans lequel la résine époxy contient
30-60 parties en poids de résine époxy bisphénol A,
10-40 parties en poids de résine époxy bisphénol F, et
5-30 parties en poids de résine novolaque époxy.

5. Procédé selon la revendication 4, dans lequel la résine époxy contient
40-50 parties en poids de résine époxy bisphénol A,
15-30 parties en poids de résine époxy bisphénol F, et
10-20 parties en poids de résine novolaque époxy.

6. Procédé selon l'une des revendications précédentes, dans lequel les particules conductrices sont en cuivre.

7. Procédé selon l'une des revendications précédentes, dans lequel du Fe₃O₄ est ajouté comme additif.

8. Procédé selon l'une des revendications précédentes, dans lequel l'adhésif contient 3-10 parties en poids d'additifs.

9. Procédé selon l'une des revendications précédentes, dans lequel l'adhésif est durci sous une pression de 30-40 N/cm².

10. Procédé selon l'une des revendications précédentes, dans lequel l'adhésif est durci à une température comprise entre 80-200°C, en particulier entre 100-130°C.
